# FASCICULE DE BREVET EUROPEEN

(11) **EP 2 665 644 B1**
(45) Date de publication et mention de la délivrance du brevet: **10.06.2015**
(21) Numéro de dépôt: 12700567.6
(22) Date de dépôt: 19.01.2012
(51) Int. Cl.: B64C 13/28, F16H 25/24

(54) **PERFECTIONNEMENTS AUX ACTIONNEURS DE COMMANDE DE VOL A ECROU SECONDAIRE**
VERBESSERUNGEN AN FLUGSTEUERUNGSAKTUATOREN MIT EINER SEKUNDÄREN MUTTER
IMPROVEMENTS IN FLIGHT-CONTROL ACTUATORS HAVING A SECONDARY NUT

(30) Priorité: 19.01.2011 FR 1150423
(43) Date de publication de la demande: 27.11.2013
(73) Titulaire: Goodrich Actuation Systems SAS, 78530 Buc (FR)
(72) Inventeur: MEDINA, Raphaël, F-95440 Ecouen (FR)
(74) Mandataire: Noronha, Catherine
(86) Numéro de dépôt international: PCT/EP2012/050817
(87) Numéro de publication internationale: WO 2012/098206

(56) Documents cités:
- EP-A1- 1 398 541
- EP-A2- 1 262 688
- EP-A2- 1 283 384
- EP-A2- 1 467 124
- US-A- 4 637 272

## Description

### DOMAINE TECHNIQUE GÉNÉRAL ET ART ANTÉRIEUR

La présente invention est relative à un actionneur de commande de vol.

Plus particulièrement, elle concerne les actionneurs de commande de vol horizontaux (THSA ou Trimmable Horizontal Stabilizer Actuator selon la terminologie anglo-saxonne).

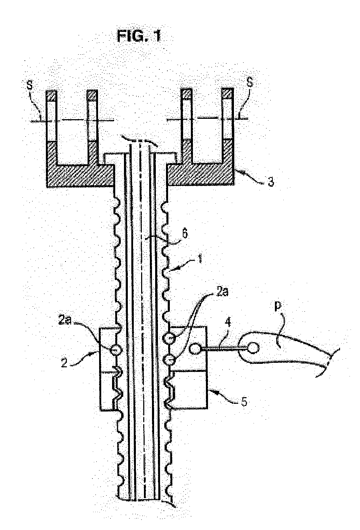

Typiquement, comme l'illustre la figure 1, un tel actionneur de commande de vol comporte une vis de commande 1 et un écrou 2.

La vis 1 est reliée par un système de cardan 3 à la structure S de l'avion, tandis que l'écrou 2, qui coopère avec la vis 1 et qui est par exemple un écrou de type à billes 2a, est monté sur celle-ci en étant relié au plan P à commander, par exemple au moyen d'un autre système à cardan 4.

Il est classique dans le domaine de l'aéronautique de dédoubler les différents moyens utilisés de façon à assurer une redondance. De cette façon, la défaillance d'une seule pièce ne peut entrainer la perte de contrôle de la commande de l'avion.

C'est ainsi qu'il est habituel de prévoir que la vis 1 est une vis creuse à l'intérieur de laquelle s'étend une tige 6 de sécurité qui réalise une voie secondaire et prend le relais de la voie primaire que constitue la vis creuse 1 lorsque celle-ci est défaillante.

C'est également pour la même raison qu'il est généralement prévu, en plus de l'écrou primaire 2, un écrou secondaire 5 qui, en fonctionnement normal, n'est pas en prise avec le filetage de la vis 1, mais qui prend le relais de l'écrou 2 en cas de défaillance de celui-ci. Cet écrou secondaire 5 peut par exemple être un écrou à friction, qui est d'une pièce avec l'écrou primaire 2 et qui est arrangé de façon à ce que ses dents ne soient pas en prise avec le filetage de la vis de commande 1 tant que l'écrou primaire 2 et ses billes 2a sont engagés sur la vis 1. Si toutefois les billes 2a de l'écrou primaire 2 venaient à sortir de leurs logements, l'écrou secondaire 5 prendrait le relais et supporterait l'effort à la place de l'écrou primaire 2, maintenant ainsi la commande du plan P.

On souhaite ici envisager le cas où la défaillance ne serait pas due à une rupture de la vis de commande 1 ou de l'écrou primaire 2, mais au fait que les filets de la vis 1 viendraient à s'arracher empêchant alors un quelconque contrôle de l'appareil.

Même si ce type d'incident parait hypothétique, on peut imaginer que l'effort sur la vis génère une amorce de rupture ou qu'une crique se forme sur le filetage de la vis de commande 1 et se propage tout le long de la vis sous l'écrou primaire 2. Lorsqu'un filet de la vis cède et est déconnecté de cet écrou primaire 2, ce dernier se décale et vient charger le filet de la vis 1 en dessous. Le filetage se débobine et s'arrache sur la longueur chargée de la vis.

D'autres exemples d'un tel actionneur de commande de vol peuvent êtres trouvés dans EP 1467124, qui considéré comme l'état de l'art le plus proche décrivant toutes les caractéristiques du préambule de la revendication 1 et US 4637272.

### PRÉSENTATION GÉNÉRALE DE L'INVENTION

L'invention a pour but de proposer une solution permettant de résoudre cette problématique.

Plus particulièrement, elle propose un actionneur de commande de vol comportant une vis de commande qui coopère avec un écrou primaire, l'actionneur comportant également un écrou secondaire qui coopère avec la vis de commande en cas de défaillance de l'écrou primaire, dans lequel l'écrou primaire et l'écrou secondaire sont distants et se déplacent essentiellement le long de deux zones distinctes de la vis, caractérisé en ce que les deux zones distinctes de la vis sont séparées par un système de blocage, configuré pour empêcher qu'une cassure apparaissant au niveau d'une desdites zones de la vis ne se propage vers l'autre desdites zones.

Notamment, l'écrou secondaire se déplace essentiellement le long d'une portion de la vis qui est habituellement non chargée par l'écrou primaire.

De cette façon, si une crique se propage au niveau d'un filet de la vis ou si un filet est l'objet d'une forte usure, l'écrou secondaire prend le relais de l'écrou primaire en coopérant avec le filetage de la vis au niveau d'une zone de celle-ci qui n'est habituellement pas sollicitée et où par conséquent la crique ne se propagera pas.

On évite ainsi l'arrachement du filet sur l'ensemble de la vis.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 illustre schématiquement un actionneur de commande de vol à vis et écrou conforme à un mode de réalisation connu de l'état de la technique ;
- la figure 2 illustre un exemple utile pour comprendre l'invention;
- la figure 3 illustre un mode de réalisation possible de l'invention.

### DESCRIPTION D'UN OU PLUSIEURS MODES DE MISE EN OEUVRE ET DE REALISATION

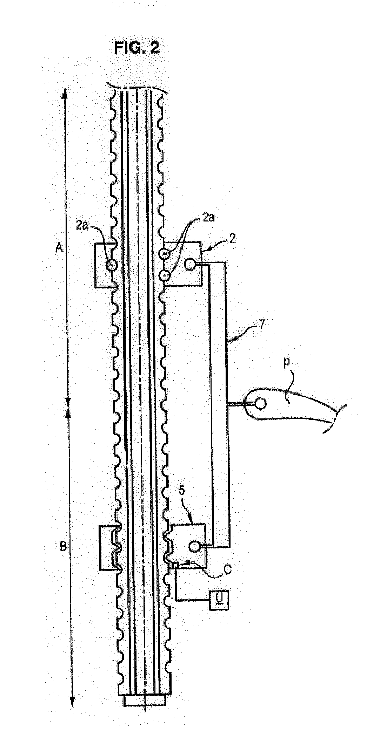

Sur la figure 2, on a représenté la vis de commande 1 et l'écrou primaire 2 d'un actionneur de commande de vol, qui est par exemple un actionneur de commande de vol horizontal de type THSA.

Comme dans le cas de l'actionneur de la figure 1, cette vis 1 est reliée par un système de cardan (non représenté sur cette figure 2) à la structure de l'avion. L'écrou primaire 2 est par exemple un écrou de type à billes 2a. Son déplacement le long de la vis 1 commande l'orientation d'un plan P de commande.

L'actionneur comporte également, sur la vis de commande 1, un écrou secondaire 5, qui en fonctionnement normal de l'écrou primaire 2 n'est pas en prise avec le filetage de ladite vis 1, mais qui coopère avec ladite vis 1 lorsque l'écrou primaire 2 est défaillant.

L'écrou primaire 2 est dans l'exemple donné ici un écrou à billes, l'écrou secondaire 5 étant quant à lui un écrou à friction.

Contrairement au cas illustré sur la figure 1, cet écrou 5 est distant de l'écrou primaire 2, en l'occurrence de plusieurs filets de dents.

Plus précisément, cet écrou secondaire 5 se déplace le long d'une portion B de la vis 1 qui est habituellement non chargée par l'écrou primaire 2, l'écrou primaire 2 se déplaçant essentiellement le long d'une partie A de la vis 1 distincte de la partie A.

Lorsqu'une crique ou usure dans le filetage de la vis démarre sous l'écrou primaire 2, le filet sous la zone chargée disparait sous l'écrou primaire 2. Lorsque ce filet est tellement usé que l'écrou primaire s'apprête à charger le filet de vis en dessous, la charge est immédiatement reprise par l'écrou secondaire dans la zone B de la vis 1. Or cette zone B est une zone dépourvue de crique et non usée, puisque généralement non chargée. Ainsi, si un filet de la zone de la vis 1 habituellement sollicitée s'avérait défaillant, la charge est reprise par une autre zone de la vis 1 (la zone B), qui quant à elle n'est habituellement pas chargée et sur laquelle par conséquent la crique n'a pas de raison de se propager.

La commande est ainsi maintenue, même en cas de début de défaillance du filetage de la vis 1.

Dans l'exemple illustré sur la figure 2, cet écrou secondaire 5 est relié, avec l'écrou primaire 2, par l'intermédiaire d'une même bride d'attache 7 au plan P, dont on commande l'orientation.

En variante, les deux écrous 2 et 5 peuvent être fixés par des attaches indépendantes sur le plan P.

La zone A est par exemple définie comme la zone dans laquelle l'écrou primaire 2 évolue pendant 90 % des temps de vol.

La zone B est par exemple une zone de la vis 1 qui n'est sollicitée par ce même écrou primaire que moins de 50 % des temps de vol, par exemple moins de 20 % voire préférentiellement moins de 10 %.

Par exemple, mais sans limitation, la vis 1 peut avoir une longueur totale de l'ordre de 650 mm. L'écrou primaire ne sollicite pendant 90% du temps de vol qu'une zone limitée à une longueur d'environ 150 mm tandis que les 500 mm restants sont peu sollicités. C'est en regard de cette deuxième zone que se trouve l'écrou secondaire 5.

Comme déjà indiqué, si le filetage de la vis 1 devait s'user dans la zone A qui est la zone sollicitée par l'écrou 2, l'écrou secondaire 5 rentrerait en prise avec la partie du filetage de la vis devant laquelle il se trouve (zone B) et ce avant que le filetage de la zone A ne cède. Cette zone B de la vis 1 et l'écrou secondaire 5 prennent alors le relais du filetage défaillant dans la zone A et de l'écrou primaire 2.

Un capteur d'effort C permettant de détecter la mise en charge de l'écrou secondaire 5 est prévu au niveau de celui-ci. Ce capteur est par exemple relié à une électronique U, qui met en oeuvre un traitement sur les capteurs auxquelles elle est reliée et renvoie des informations à un calculateur de l'aéronef, par exemple afin de déclencher une alarme signifiant qu'une opération de maintenance doit être prévue à l'occasion de la prochaine escale.

L'écrou primaire 2 et l'écrou secondaire 5 sont distants et se déplacent essentiellement le long de deux zones distinctes de la vis 1 (zones A et B), et les deux zones distinctes de la vis 1 sont séparées par un système 8 de blocage, configuré pour empêcher qu'une cassure apparaissant au niveau d'une desdites zones de la vis ne se propage vers l'autre desdites zones.

Ce système 8 de blocage peut être réalisé de diverses manières.

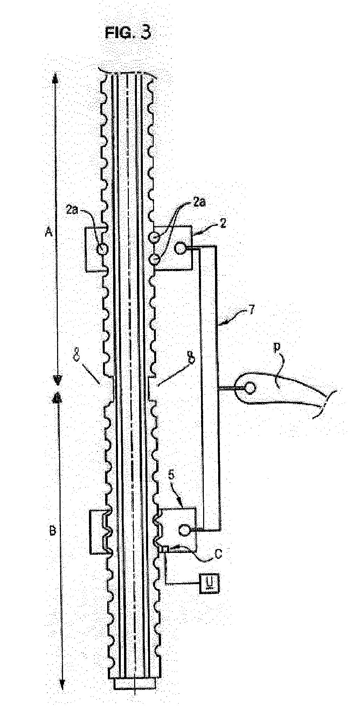

En Figure 3, on illustré le cas où le système 8 de blocage est une discontinuité introduite dans le filet de la vis 1, entre les deux zones de déplacement habituelles A et B de l'écrou primaire 2 et de l'écrou secondaire 5. Comme on le comprend, si le filetage de la vis 1 devait s'user ou se casser dans la zone A qui est la zone sollicitée par l'écrou primaire 2, cette cassure ne pourrait se propager vers la zone B qui est la zone sollicitée par l'écrou secondaire 5, et inversement, en raison de la présence de la discontinuité 8.

Le système 8 de blocage peut être également une gorge, ou toute autre réalisation permettant d'empêcher la propagation de cassure d'une zone à l'autre.

Ainsi, la zone le long de laquelle l'écrou secondaire 5 se déplace est préservée de la propagation d'une cassure apparue au niveau de la zone le long de laquelle l'écrou primaire 2 se déplace.

La vis de commande 1 est, par exemple, une vis filetée. Toutefois, l'invention s'applique à différents types de vis de commande et n'est pas limitée à une vis filetée. Ainsi, la vis de commande 1 peut par exemple être une vis à billes, ou une vis à rouleaux, ou une vis simple. D'autres types de vis sont utilisables, que ce soit dans le cas où la vis de commande présente un unique tronçon, ou est constituée de deux tronçons (première et deuxième vis de commande).

De même, les écrous 2,5 utilisés en coopération avec la vis de commande 1 peuvent reposer sur diverses technologies : écrous à bille, à friction, ou autre.

## Revendications

1. Actionneur de commande de vol comportant une vis de commande (1) qui coopère avec un écrou primaire (2), l'actionneur comportant également un écrou secondaire (5) qui coopère avec la vis de commande en cas de défaillance de l'écrou primaire, dans lequel l'écrou primaire et l'écrou secondaire sont distants et se déplacent essentiellement le long de deux zones distinctes de la vis (A, B),
**caractérisé en ce que** les deux zones distinctes de la vis sont séparées par un système de blocage (8), configuré pour empêcher qu'une cassure apparaissant au niveau d'une desdites zones de la vis ne se propage vers l'autre desdites zones.

2. Actionneur de commande de vol selon la revendication 1, **caractérisé en ce que** l'écrou secondaire se déplace essentiellement le long d'une portion de la vis (B) qui est habituellement non chargée par l'écrou primaire.

3. Actionneur de commande de vol selon la revendication 1, **caractérisé en ce que** l'écrou primaire et l'écrou secondaire sont reliés au plan à commander (P) par l'intermédiaire d'une même bride d'attache (7).

4. Actionneur de commande de vol selon la revendication 1, **caractérisé en ce que** l'écrou primaire et l'écrou secondaire sont reliés au plan à commander (P) par l'intermédiaire d'attaches distinctes.

5. Actionneur de commande de vol selon la revendication 1, **caractérisé en ce que** l'écrou primaire est donné ici un écrou à billes (2a), l'écrou secondaire étant quant à lui un écrou à friction.

6. Actionneur de commande de vol selon la revendication 1, dans lequel le système de blocage est une gorge ou une discontinuité de la vis de commande.

7. Actionneur de commande de vol selon l'une des revendications 1 à 6, **caractérisé en ce que** la vis de commande est choisie parmi une vis filetée, une vis à billes, ou une vis à rouleaux.

8. Actionneur de commande de vol horizontale, **caractérisé en ce qu'**il est constitué par un actionneur selon l'une des revendications précédentes.

## Patentansprüche

1. Flugsteuerungsaktuator mit einer Steuerspindel (1), die mit einer primären Mutter (2) zusammenwirkt, wobei der Aktuator auch eine sekundäre Mutter (5) aufweist, die mit der Steuerspindel im Falle eines Versagens der primären Mutter zusammenwirkt, wobei die primäre Mutter und die sekundäre Mutter beabstandet sind und sich im Wesentlichen entlang zweier separater Zonen der Spindel (A, B) bewegen,
**dadurch gekennzeichnet, dass** die beiden separaten Zonen der Spindel durch ein Blockiersystem (8) getrennt sind, das dafür konfiguriert ist, zu verhindern, dass ein Bruch, der in einer der Zonen der Spindel erscheint, sich zur anderen der Zonen fortpflanzt.

2. Flugsteuerungsaktuator nach Anspruch 1, **dadurch gekennzeichnet, dass** sich die sekundäre Mutter im Wesentlichen entlang eines Abschnitts der Spindel (B) bewegt, die normalerweise nicht von der primären Mutter belastet ist.

3. Flugsteuerungsaktuator nach Anspruch 1, **dadurch gekennzeichnet, dass** die primäre Mutter und die sekundäre Mutter durch denselben Befestigungsflansch (7) mit dem zu steuernden Flugzeug (P) verbunden sind.

4. Flugsteuerungsaktuator nach Anspruch 1, **dadurch gekennzeichnet, dass** die primäre Mutter und die sekundäre Mutter durch separate Befestigungselemente mit dem zu steuernden Flugzeug (P) verbunden sind.

5. Flugsteuerungsaktuator nach Anspruch 1, **dadurch gekennzeichnet, dass** die primäre Mutter hier als Kugelmutter (2a) gegeben ist, wobei die sekundäre Mutter selbst eine Reibungsmutter ist.

6. Flugsteuerungsaktuator nach Anspruch 1, bei dem das Blockiersystem eine Kerbe oder eine Unterbrechung der Steuerspindel ist.

7. Flugsteuerungsaktuator nach einem der Ansprüche 1 bis 6, **dadurch gekennzeichnet**, das die Steuerspindel aus einer Gewindespindel, einer Kugelrollspindel oder einer Rollspindel ausgewählt wird.

8. Horizontaler Flugsteuerungsaktuator, **dadurch gekennzeichnet, dass** er aus einem Aktuator nach einem der vorhergehenden Ansprüche besteht.

## Claims

1. Flight control actuator having a control screw (1) which cooperates with a primary nut (2), the actuator also having a secondary nut (5) which cooperates with the control screw in case of failure of the primary nut, in which the primary nut and the secondary nut are a distance apart and move essentially along two separate zones of the screw (A, B),
**characterized in that** the two separate zones of the screw are separated by a blocking system (8) configured for preventing a break that appears in one of said zones of the screw from propagating towards the other of said zones.

2. Flight control actuator according to Claim 1, **characterized in that** the secondary nut moves essentially along a portion of the screw (B) which is ordinarily not loaded by the primary nut.

3. Flight control actuator according to Claim 1, **characterized in that** the primary nut and the secondary nut are connected to the plane to be controlled (P) by means of the same fastening flange (7).

4. Flight control actuator according to Claim 1, **characterized in that** the primary nut and the secondary nut are connected to the plane to be controlled (P) by means of separate fasteners.

5. Flight control actuator according to Claim 1, **characterized in that** the primary nut is given here a ball nut (2a), the secondary nut itself being a friction nut.

6. Flight control actuator according to Claim 1, in which the blocking system is a groove or a discontinuity of the control screw.

7. Flight control actuator according to any one of Claims 1 to 6, **characterized in that** the control screw is chosen from a threaded screw, a ball screw, or a roller screw.

8. Horizontal flight control actuator, **characterized in that** it consists of an actuator according to any one of the preceding claims.
